# EUROPÄISCHE PATENTSCHRIFT

(11) **EP 0 874 257 B1**
(45) Veröffentlichungstag und Bekanntmachung des Hinweises auf die Patenterteilung: **28.09.2005**
(21) Anmeldenummer: 98106018.9
(22) Anmeldetag: 02.04.1998
(51) Int. Cl.: G02B 6/38, G02B 6/25

(54) **Verfahren zur Konfektionierung eines Polymer-Lichtwellenleiters mit einem Steckerstift**
Method for assembling a polymeric lightguide in a ferrule
Procédé d'assemblage d'un guide d'onde polymérique dans un embout

(30) Priorität: 21.04.1997 DE 19716638
(43) Veröffentlichungstag der Anmeldung: 28.10.1998
(73) Patentinhaber: Harting Electric GmbH & Co. KG, 32339 Espelkamp (DE)
(72) Erfinder: Harting, Dietmar, Dipl.-Kaufm., 32339 Espelkamp (DE); Coors, Erich, Dipl.-Ing., 32339 Espelkamp (DE)

(56) Entgegenhaltungen:
- EP-A- 0 666 486
- EP-A- 0 715 194
- PATENT ABSTRACTS OF JAPAN vol. 007, no. 270 (P-240), 2.Dezember 1983 & JP 58 149012 A (SUMITOMO DENKI KOGYO KK), 5.September 1983,
- PATENT ABSTRACTS OF JAPAN vol. 014, no. 001 (P-985), 8.Januar 1990 & JP 01 254902 A (MITSUBISHI RAYON CO LTD), 11.Oktober 1989,
- PATENT ABSTRACTS OF JAPAN vol. 096, no. 009, 30.September 1996 & JP 08 122596 A (SHARP CORP), 17.Mai 1996,
- PATENT ABSTRACTS OF JAPAN vol. 095, no. 009, 31.Oktober 1995 & JP 07 151280 A (FURUKAWA ELECTRIC CO LTD:THE), 13.Juni 1995,
- PATENT ABSTRACTS OF JAPAN vol. 096, no. 009, 30.September 1996 & JP 08 136741 A (SUMITOMO WIRING SYST LTD), 31.Mai 1996,

## Beschreibung

Die Erfindung betrifft ein Verfahren zur Konfektionierung eines Polymer-Lichtwellenleiters mit einem Steckerstift.

Bei der Montage von Steckerstiften / Faserendhülsen an Lichtwellenleiter aus Polymer-Materialien kommen derzeit folgende Verfahren zur Bearbeitung der optisch wirksamen Faser-Endflächen zur Anwendung:
- Nur Schneiden (mit Spezialklinge)
- Schneiden + Auftragen einer "Index-Matching-Paste" zur Verbesserung des Lichtübertritts in ein vorgesetztes "optisches Fenster"
- Schneiden + Anschmelzen des überstehenden Faserendes zur Erzeugung einer eingeebneten Endfläche ("hot plate"-Verfahren)
- Faser mit Überstand montieren Endfläche auf Maß zurückschleifen und polieren.

Letzteres Verfahren ist von der Verarbeitung der (Quarz-) Glasfasern übernommen und liefert insgesamt gute und dämpfungsarme Faserendflächen für eine optische Steckverbindung.

Der für die Bearbeitung aufzuwendende Zeitaufwand steigt jedoch mehr als proportional zur gewünschten Qualität der Endfläche. In der Massenfertigung sind daher hochwertige Faserendflächen bisher kaum wirtschaftlich zu realisieren.

Der Erfindung liegt die Aufgabe zugrunde, an Lichtwellenleitern in Steckerstiften mit kurzen Bearbeitungszeiten hochwertige Endflächen zu erzeugen

Diese Aufgabe wird dadurch gelöst, daß die Endflächenbearbeitung des Steckerstifts und des Faserendes durch zerspanendes Abtragen mittels eines mit hoher Geschwindigkeit umlaufenden, einschneidigen Werkzeuges gemeinsam erfolgt, wobei im Trockenschnitt sowohl die optisch wirksame Endfläche des Lichtwellenleiters erzeugt, als zugleich auch die Länge des Steckerstifts auf Fertigungsmaß bearbeitet wird.

Vorteilhafte Weiterbildungen des Verfahrens sind in den Ansprüchen 2 bis 4 angegeben.

Die mit der Erfindung erzielten Vorteile bestehen insbesondere darin, daß eine wirtschaftliche Erzeugung von hochwertigen Endflächen an Polymer-Lichtwellenleitern bei kurzen Taktzeiten (typ. ≤ 3 sec.) erreicht wird. Dabei wird im "Trockenschnitt" ohne zusätzliche Hilfsstoffe gearbeitet. Die erzeugten Faserendflächen sind frei von jeglicher Oberflächen-Kontamination. Die vom Ablängen der Fasern herrührenden Beschädigungen / Verschmutzungen des Faserendes werden vollständig entfernt.

Dabei ist das Verfahren gut automatisierbar, und leicht in entsprechende Fertigungsabläufe einzubinden.
Ferner ist das Verfahren umweltfreundlich, und das durch Absaugung gesammelte geringe Spanvolumen ist problemlos zu entsorgen.

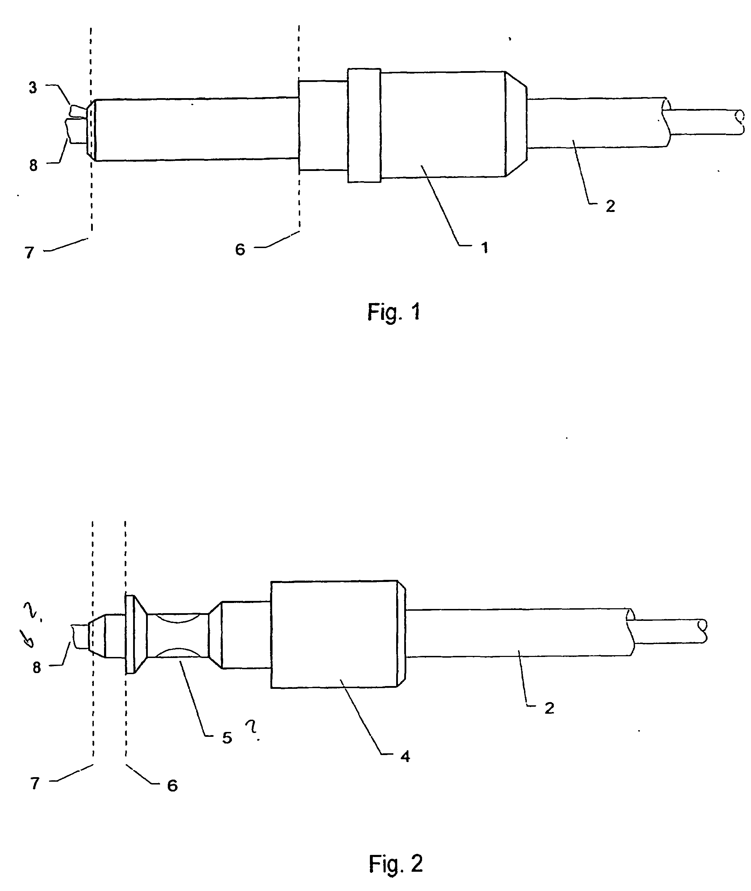

Ein Ausführungsbeispiel des Verfahrens ist in der Zeichnung dargestellt und wird im folgenden näher erläutert. Es zeigen
- Fig. 1: die Ansicht eines Steckerstifts mit einer spritzgegossenen Endhülse, und
- Fig. 2: die Ansicht eines Steckerstifts in Form einer angecrimpten metallischen Endhülse.

Zur Endflächenbearbeitung werden die Steckerstifte 1 / Faserendhülsen 4 mit den darin fixierten LWL-Polymerfasern 2 in einer Spannvorrichtung aufgenommen und in bezug auf ihre mechanische Referenzebene 6 gehalten. Durch Verschieben dieses Werkstückträgers in einer Präzisionsführung erfolgt dann die mechanische Bearbeitung des Faserüberstandes 8 durch das in der Bearbeitungsebene 7 umlaufende Werkzeug. (Diese Ebene wird damit zur späteren optischen Referenzebene des Steckerstiftes.)
Dabei wird das überstehende Faserende - zusammen mit dem Angußbereich 3 der Stiftspitze - durch die mit hoher Geschwindigkeit umlaufende Werkzeugschneide abgetragen, so daß zugleich mit der Endflächenbearbeitung der Faser auch eine Längen-Feinbearbeitung des Steckerstiftes 1 erfolgt. Metallische Steckerstifte 1 / Faserendhülsen 4 sollten für diesen Vorgang vorzugsweise aus gut zerspanbarem Buntmetall bestehen.
Als aktiv wirksames Schneidenmaterial kommt vorzugsweise Diamant zur Anwendung.
Bei Schnittgeschwindigkeiten im Bereich 30 - 50 m/s und angepaßter Vorschubgeschwindigkeit von ca. 3 mm/sec. ergibt sich eine hohe Oberflächengüte bei einer Bearbeitungszeit von nur 2 - 3 sec. Die erzeugte Faserendfläche hat eine geringe Restrauhigkeit von
max. Rauhtiefe Rₜ = 0,5 - 1 µm
Mittenrauhwert Rₐ < 0,1 µm
und weist eine hohe optische Transparenz auf.
Damit entspricht sie funktionell etwa der durch Schleifen und Polieren erreichbaren Oberflächenqualität - bei einer um etwa den Faktor 10 reduzierten Bearbeitungszeit.
Das Verfahren erlaubt somit die wirtschaftliche Erzeugung von optisch hochwertigen Endflächen an Polymer-Lichtwellenleitern.
Da es im "Trockenschnitt" arbeitet, sind die Faserendflächen frei von jeglicher Oberflächenkontamination. Die von den vorherigen Bearbeitungsvorgängen der Faser herrührenden Beschädigungen / Verschmutzungen des Faserendes werden vollständig entfernt.

## Patentansprüche

1. Verfahren zur Konfektionierung eines Polymer-Lichtwellenleiters mit einem Steckerstift, **dadurch gekennzeichnet,**
**dass** die Endflächenbearbeitung des Steckerstifts (1) und des Faserendes durch zerspanendes Abtragen mittels eines mit hoher Geschwindigkeit umlaufenden, einschneidigen Werkzeuges gemeinsam erfolgt, wobei im Trockenschnitt sowohl die optisch wirksame Endfläche des Lichtwellenleiters erzeugt, als zugleich auch die Länge des Steckerstifts auf Fertigungsmaß bearbeitet wird.

2. Verfahren nach Anspruch 1, **dadurch gekennzeichnet,**
**dass** der Steckerstift (1) durch Spritzgießen eines thermoplastischen Kunststoffes hergestellt wird, wobei der Lichtwellenleiter zur Fixierung als Einlegeteil direkt mit umspritzt wird.

3. Verfahren nach Anspruch 1, **dadurch gekennzeichnet,**
**dass** der Steckerstift (1) aus einem metallischen Werkstoff besteht und durch Crimpen mit dem Lichtwellenleiter zugfest verbunden wird, wobei nachstehende Verfahrensschritte zur Anwendung kommen:
a) Absetzen des Faser-Außenmantels,
b) Aufschieben des Steckerstifts (1) / der Faserendhülse (4) auf den Lichtwellenleiter, bis das Faserende ein geringes Stück aus der Stirnseite des Steckerstifts herausragt,
c) Ancrimpen des Steckerstifts an dem Lichtwellenleiter, wobei eine mechanische Fixierung am Außenmantel oder/und direkt an der Faser erfolgt,
d) Kompression der Faserführungsbohrung im Bereich der Stiftspitze auf den realen Faserdurchmesser, wobei
aa) eine Nachzentrierung der Faser, und
bb) eine schwingungsfreie Fixierung des Faserendes für die nachfolgende Endflächenbearbeitung erfolgt, und
e) Zerspanendes Abtragen des Faserendes und des (geringen) Aufmaßes des Steckerstifts auf Längen-Fertigmaß.

4. Verfahren nach Anspruch 1, **dadurch gekennzeichnet, dass** ein Werkstückträger mit einer Spannvorrichtung für den Steckerstift (1) vorgesehen ist, zur Bearbeitung der Endfläche des Steckerstiftes mit dem Lichtwellenleiter, mittels eines mit hoher Geschwindigkeit umlaufenden, einschneidigen Werkzeuges.

5. Verfahren nach Anspruch 4, **dadurch gekennzeichnet, dass** das Werkzeug für die Endflächenbearbeitung über zwei Arbeitsschneiden verfügt, von denen eine als Vorschneider arbeitet.

6. Verfahren nach Anspruch 4 und 5, **dadurch gekennzeichnet, dass** das Werkzeug als Schneidmaterial Diamant verwendet.

7. Verfahren nach einem oder mehreren der vorstehenden Ansprüche,
**dadurch gekennzeichnet,**
**dass** der Steckerstift (1) aus einem metallischen Werkstoff besteht und mit dem Lichtwellenleiter (2) verbunden ist, wobei die optisch wirksame Endfläche des Lichtwellenleiters sowie die Endfläche des Steckerstiftes durch zerspanendes Abtragen in der Bearbeitungsebene (7) erhalten ist.

8. Verfahren nach einem oder mehreren der vorstehenden Ansprüche,
**dadurch gekennzeichnet,**
**dass** der Steckerstift (1) aus einem Buntmetall besteht.

9. Verfahren nach einem oder mehreren der vorstehenden Ansprüche,
**dadurch gekennzeichnet,**
**dass** der optisch wirksame Endfläche des Lichtwellenleiters (2) eine maximale Rauhtiefe Rₜ von 0,5 - 1 µm und einen Mittenrauhwert Rₐ von weniger als 0,1 µm aufweist.

## Claims

1. A device for assembling a polymeric lightguide with a connector pin,
**characterized in that**
the end face treatment of the connector pin (1) and of the fiber end are carried out simultaneously in the form of a material removal process with a single-edged tool that revolves with a high speed, wherein the optically effective end face of the lightguide is produced and the length of the connector pin is simultaneously processed to the specified final dimensions by means of a dry-cutting process.

2. The method according to Claim 1, **characterized in that**
the connector pin (1) is manufactured by injection-molding a thermoplastic polymer, wherein the lightguide is fixed thereon in the form of an insert by directly injection-molding around the lightguide.

3. The method according to Claim 1, **characterized in**
**that** the connector pin (1) consists of a metallic material and is connected to the lightguide in a strain-proof fashion by means of crimping, wherein the following processing steps are carried out:
a) stepping the fiber sheath,
b) pushing the connector pin (1) / the ferrule (4) on the lightguide until the fiber end slightly protrudes from the end face of the connector pin,
c) crimping the connector pin to the lightguide, wherein the connector pin is mechanically fixed on the sheath and/or directly on the fiber,
d) compressing the fiber guide bore to the actual fiber diameter in the region of the pin point, wherein
aa) the fiber is re-centered and
bb) the fiber end is fixed in a vibration-free fashion for the subsequent end face treatment, and
e) processing the fiber end and the (slight) oversize of the connector pin to the final longitudinal dimensions.

4. The method according to Claim 1, **characterized in**
**that** a work piece carrier is provided with a clamping device for the connector pin (1) in order to process the end face of the connector pin together with the lightguide, namely by means of a single-edged tool that revolves with a high speed.

5. The method according to Claim 4, **characterized in**
**that** the tool for the end face treatment comprises two cutting edges, one of which functions as a rough cutter.

6. The method according to Claims 4 and 5, **characterized in**
**that** the cutting material of the tool consists of diamond.

7. The method according to at least one of the preceding claims,
**characterized in**
**that** the connector pin (1) consists of a metallic material and is connected to the lightguide (2), wherein the optically effective end face of the lightguide as well as the end face of the connector pin are produced by material removal in the processing plane (7).

8. The method according to at least one of the preceding claims,
**characterized in**
**that** the connector pin (1) consists of a non-ferrous metal.

9. The method according to least one of the preceding claims,
**characterized in**
**that** the optically effective end face of the lightguide (2) has a maximum depth of roughness Rₜ between 0.5 and 1 µm and an average surface roughness Rₐ of less than 0.1 µm.

## Revendications

1. Procédé d'assemblage d'un guide d'ondes optiques polymérique avec une broche de connexion, **caractérisé en ce que**
l'usinage des surfaces d'extrémité de la broche de connexion (1) et de l'extrémité des fibres est assuré en commun par enlèvement de copeaux, à l'aide d'un outil à un taillant, rotatif à grande vitesse, aussi bien la surface d'extrémité optiquement active du guide d'ondes optiques, que simultanément aussi la longueur de la broche de connexion étant usinées à cote de fabrication par usinage à sec.

2. Procédé selon la revendication 1, **caractérisé en ce que**
la broche de connexion (1) est fabriquée par moulage par injection d'une matière thermoplastique, pour la fixation, le guide d'ondes optiques étant directement enrobé en même temps par extrusion, en tant que pièce d'insertion.

3. Procédé selon la revendication 1, **caractérisé en ce que**
la broche de connexion (1) est en une matière métallique et **en ce qu'**elle est reliée par sertissage avec le guide d'ondes optiques, de façon résistant à la traction,
les étapes de procédés suivantes étant appliquées :
a) dénudage de l'enveloppe extérieure de la fibre,
b) montage de la broche de connexion (1) / de la douille d'extrémité de fibre (4) sur le guide d'ondes optiques, jusqu'à ce que l'extrémité de fibre saillisse par un très petit bout hors de
la face frontale de la broche de connexion,
c) sertissage de la broche de connexion sur le guide d'ondes optiques, une fixation mécanique étant assurée sur l'enveloppe extérieure et/ou directement sur la fibre,
d) compression de l'alésage de guidage de la fibre dans la zone de la pointe de la broche au diamètre réel de la fibre,
aa) un recentrage de la fibre et
bb) une fixation sans oscillation de l'extrémité de la fibre étant assurés pour l'usinage consécutif des surfaces d'extrémité, et
e) usinage par enlèvement de copeaux de l'extrémité de fibre et de la (faible) surépaisseur de la broche de connexion à la cote de finition en longueur.

4. Procédé selon la revendication 1, **caractérisé en ce**
**qu'**on a prévu un porte-pièce avec un dispositif de serrage pour la broche de connexion (1), pour l'usinage de la surface d'extrémité de la broche de connexion avec le guide d'ondes optiques, à l'aide d'un outil à un taillant, rotatif à grande vitesse.

5. Procédé selon la revendication 4, **caractérisé en ce que**
l'outil pour l'usinage des surfaces d'extrémité dispose de deux taillants, dont l'un fait office de taraud ébaucheur.

6. Procédé selon la revendication 4 ou 5, **caractérisé en ce que**
l'outil utilise du diamant en tant que matériau de coupe.

7. Procédé selon l'une quelconque ou selon plusieurs des revendications
précédentes, **caractérisé en ce que**
la broche de connexion (1) est en une matière métallique et **en ce qu'**elle est reliée au guide d'ondes optiques (2), la surface d'extrémité optiquement active du guide d'ondes optiques, ainsi que la surface d'extrémité de la broche de connexion étant maintenues dans le plan d'usinage (7), par enlèvement de copeaux.

8. Procédé selon l'une quelconque ou selon plusieurs des revendications précédentes, **caractérisé en ce que**
la broche de connexion (1) est en un métal non ferreux.

9. Procédé selon l'une quelconque ou selon plusieurs des revendications précédentes, **caractérisé en ce que**
la surface d'extrémité optiquement active du guide d'ondes optiques (2) présente une profondeur de rugosité maximale Rₜ de 0,5 à 1 µm et un indice de rugosité moyenne arithmétique Rₐ inférieur à 0,1 µm.
